# EUROPÄISCHE PATENTSCHRIFT

(11) **EP 2 347 936 B1**
(45) Veröffentlichungstag und Bekanntmachung des Hinweises auf die Patenterteilung: **17.09.2014**
(21) Anmeldenummer: 10189754.4
(22) Anmeldetag: 03.11.2010
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 27.07.2011
(73) Patentinhaber: Metalsa Automotive GmbH, 51702 Bergneustadt (DE)
(72) Erfinder: Beki, Gürkan, 51766, Engelskirchen (DE); Helsper, Michael, 57078, Siegen (DE); Theus, Katrin, 51647, Gummersbach (DE)
(74) Vertreter: Kalkoff & Partner

(56) Entgegenhaltungen:
- EP-A1- 0 919 440
- EP-A1- 2 239 166
- WO-A2-2005/092671
- DE-A1- 19 756 192

## Beschreibung

Die Erfindung betrifft ein Überrollschutzsystem für Kraftfahrzeuge, mit einem zwischen einer abgesenkten Lagerungsposition und einer aufgestellten Überschlagsposition verstellbaren Überrollkörper.

Überrollschutzsysteme der eingangs genannten Art sind in vielfältigen Ausgestaltungen aus dem Stand der Technik wie bspw. aus der EP 0 919 440 A1 und der WO 2005/092671 A2 bekannt. Sie dienen bei Kraftfahrzeugen ohne eine stabile Dachstruktur, wie Cabriolets oder Roadstern, bei denen das Fahrzeugdach zwischen einer den Fahrzeuginnenraum überdeckenden und diesen freigebenden Position verstellt werden kann, zum Schutz der Insassen im Falle eines Überschlages, wobei die in eine Überschlagsposition aufgestellten Überrollkörper den Fahrzeuginsassen einen Überlebensraum bereitstellen, wenn das Fahrzeug bei einem Überschlag auf den Überrollkörpern abrollt.

Neben starr am Fahrzeug angeordneten Überrollkörpern, bspw. Überrollbügeln, welche sich sowohl über die gesamte Fahrzeugbreite erstrecken, aber auch nur jeweils hinter einem Fahrzeugsitz angeordnet sein können, werden in modernen Fahrzeugen vermehrt aktive Überrollschutzsysteme der eingangs genannten Art eingesetzt, bei denen die in der Regel als Profilkörper ausgeführten Überrollkörper im Normalbetrieb des Fahrzeuges in einer abgesenkten Lagerungsposition befindlich sind, in der diese von außen nicht sichtbar sind und somit keinen störenden Einfluss auf den optischen Eindruck des Fahrzeuges haben. Im Gefahrenfall, nämlich bei einem drohenden Überschlag werden derartige Überrollkörper aus der Lagerungsposition in die aufgestellte Überschlagsposition verstellt, in der sie in Verbindung mit der Karosserie einen Überlebensraum aufspannen.

Überrollkörper aktiver Überrollschutzsysteme können grundsätzlich beliebige Formen aufweisen. Aufgrund deren im Normalbetrieb nicht sichtbaren Anordnung ist überdies eine Auslegung der Überrollkörper allein unter funktionalen Gesichtspunkten möglich, so dass auf eine bspw. ansprechende Bügelform verzichtet werden kann. Nachdem die Ausgestaltung der Überrollkörper somit keinen optischen Zwängen unterliegt besteht das generelle Ziel, die Überrollkörper zunehmend zu verkleinern, um sowohl eine Gewichtseinsparung zu erzielen wie auch eine Bauraumreduzierung herbeizuführen. Die üblicherweise zur Bildung der Überrollkörper zum Einsatz kommenden Profilkörper, die bspw. aus durchgehenden Metallschalen oder Rohrelementen gebildet sein können, limitieren jedoch eine Reduzierung der Baugröße, nachdem die Dimensionierung der im Querschnitt über ihre Gesamtlänge im Wesentlichen konstant ausgebildeten Überrollkörper entsprechend der maximalen, im Überschlagsfall auf den Überrollkörper wirkenden Last erfolgen muss. Dies hat zur Folge, dass der Überrollkörper nur in begrenztem Maße die Möglichkeit zur Gewichtsreduzierung bietet, da ansonsten die geforderten Festigkeitseigenschaften nicht mehr erreicht werden können.

Davon ausgehend liegt der Erfindung die Aufgabe zugrunde, ein Überrollschutzsystem bereitzustellen, dessen Überrollkörper bei einer hohen Festigkeit ein geringes Eigengewicht aufweist.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das Überrollschutzsystem ist, dass der verlagerbare Überrollkörper mindestens einen eine Wabenstruktur aufweisenden Stützkörper aufweist. Erfindungsgemäß weist der maßgeblich die Festigkeitseigenschaften des Überrollkörpers bestimmende Stützkörper dabei eine aus einer Vielzahl benachbart zueinander angeordneter Hohlräume gebildete Wabenstruktur auf. Die Öffnungen der Waben erstrecken sich dabei senkrecht zur Ebene des flächigen Stützkörpers.

Der Stützkörper zeichnet sich dadurch aus, dass er aufgrund der vorhandenen Wabenstruktur bei einem nur geringen Eigengewicht eine hohe Festigkeit und Steifigkeit aufweist und somit die Herstellung von gegenüber dem Stand der Technik deutlich gewichtsreduzierten Überrollschutzsystemen ermöglicht. Die Wabenstruktur des Stützkörpers gewährleistet, dass sämtliche im Überschlagsfall auf den Überrollkörper wirkenden Kräfte zuverlässig aufgenommen werden, ohne dass es zu einer ungewollten Deformation des Überrollkörpers kommt, infolge derer der durch die Überrollkörper aufgespannte Überlebensraum reduziert werden würde.

Erfindungsgemäß erstreckt sich der Stützkörper jedoch in Längsachsenrichtung des Überrollkörpers. Gemäß dieser Weiterbildung der Erfindung erstreckt sich der Stützkörper in Verstellrichtung des Überrollkörpers derart, dass die Öffnungen der Waben im Wesentlichen senkrecht zur Längsachse des Überrollkörpers verlaufen. Diese Ausgestaltung der Erfindung gewährleistet eine besonders hohe Stabilität des Überrollkörpers sowie hohe Widerstandsfähigkeit gegenüber den im Crashfall auftretenden Belastungen. Der Stützkörper kann durch einfache Schneidmaßnahmen aus einem plattenförmigen Rohling herausgeschnitten werden, so dass sich der Stützkörper besonders einfach herstellen lässt. Damit der Stützkörper maßgeblich die Festigkeitseigenschaften des Überrollkörpers bestimmt, erstreckt sich dieser vorzugsweise im Wesentlichen über die gesamte Längsausdehnung des Überrollkörpers. Die Ausrichtung des Stützkörpers in Längsachsenrichtung des Überrollkörpers zeichnet sich insbesondere durch die Möglichkeit aus, den Überrollkörper hierdurch besonders leicht auszubilden.

Grundsätzlich werden die erfindungsgemäßen Vorteile bereits durch einen Stützkörper erreicht, der durch eine Vielzahl benachbart angeordneter Waben gebildet ist, die gemeinsam einen flächigen Körper bilden. Nach einer vorteilhaften Weiterbildung der Erfindung ist jedoch einerseits oder beiderseits des Stützkörpers ein die Wabenstruktur überdeckender, plattenförmiger Abdeckkörper angeordnet. Gemäß dieser Ausgestaltung der Erfindung werden die Öffnungen der Waben durch den Abdeckkörper verschlossen, welcher sich in der Ebene des Stützkörpers erstreckt. Der Abdeckkörper kann sowohl einerseits, als auch beiderseits des Stützkörpers angeordnet sein. Durch die Verwendung eines Abdeckkörpers, dessen Material unabhängig von dem für die Waben verwendeten Materialien gewählt werden kann, kann die Festigkeit des Stützkörpers in ergänzender Weise gesteigert werden. Zudem werden die Wabeninnenräume gegenüber äußeren, möglicherweise schädigenden Einflüssen geschützt. Die Befestigung der Abdeckkörper kann dabei in beliebiger Weise erfolgen, wobei im Falle der Verwendung beiderseits der Wabenstruktur angeordneter Abdeckkörper auch die Verwendung solcher Verbindungselemente denkbar ist, durch die die Abdeckkörper miteinander gekoppelt sind.

In der Regel erstreckt sich der erfindungsgemäße, einen Stützkörper aufweisende Überrollkörper in der Überschlagsposition in Bereichen hinter den Köpfen der Fahrzeuginsassen. Zur Verbesserung der Insassensicherheit im Falle eines Überschlages, weist der Stützkörper nach einer weiteren Ausgestaltung der Erfindung einen energieabsorbierenden Kopfaufprallbereich auf. Der Kopfaufprallbereich ist im ausgefahrenen Zustand des Überrollkörpers dabei im Bereich hinter den Köpfen der Fahrzeuginsassen angeordnet und vermindert im Falle eines Kopfaufpralls auf den Überrollkörper die sich dabei möglicherweise ergebenden Verletzungen. Der Kopfaufprallbereich weist dabei eine von dem übrigen Bereich des Stützkörpers abweichende Gestalt auf, welche durch Deformation den Energieabbau zur Verminderung der Verletzungshöhe ermöglicht.

Die Ausgestaltung des Überrollkörpers oder Stützkörpers derart, dass der Überrollkörper oder Stützkörper einen energieabsorbierenden Kopfaufprallbereich aufweist, kann grundsätzlich in beliebiger Weise erfolgen. So besteht auch die Möglichkeit, an dem Stützkörper eine Aussparung vorzusehen, in welche eine energieabsorbierende Einlage einsetzbar ist, die den Kopfaufprallbereich bildet. Nach einer besonders vorteilhaften Ausgestaltung der Erfindung weist jedoch der Stützkörper den Kopfaufprallbereich auf, wobei der Kopfaufprallbereich gemäß einer Weiterbildung der Erfindung gegenüber dem übrigen Stützkörper eine abweichende Wabengeometrie und/oder abweichendes Wabenmaterial und/oder abweichendes Abdeckkörpermaterial aufweist. Über die Wahl der Materialien bzw. Geometrie der Waben aber auch des Abdeckkörpers kann der Stützkörper in einem definierten Bereich mit energieabsorbierenden Eigenschaften versehen werden. So kann das Wabenmaterial im Kopfaufprallbereich durch ein Material gebildet sein, welches gegenüber dem übrigen Körper die Eignung aufweist, Energie durch Verformungsarbeit abzubauen. Neben der Verwendung eines anderen Materials, wie bspw. eines Papp- oder Kunststoffmaterials kann eine entsprechende energieabsorbierende Eigenschaft über die Wabengeometrie und/oder die Wanddicken der Waben erreicht werden, ohne dass hierzu auf ein anderes Material zurückgegriffen werden muss. Die unterschiedlichen Möglichkeiten zur Erreichung der energieabsorbierenden Eigenschaften können dabei alleine aber auch in Kombination miteinander verwendet werden, so dass eine optimale Anpassung des Stützkörpers an die geforderten Festigkeitseigenschaften bei gleichzeitig bestehendem zusätzlichen Insassenschutz erreicht werden kann.

Der erfindungsgemäße Stützkörper ist in der Form der Waben grundsätzlich nicht festgelegt. Im Rahmen der Erfindung sind Waben einzelne Hohlräume, die durch ihre benachbarte Anordnung zueinander gemeinsam den Stützkörper mit einer Wabenstruktur bilden. So können die Waben einen beliebigen poylgonalen, bspw. einen dreieckigen Querschnitt aufweisen, die entsprechend den auftretenden Belastungen ausgerichtet sind. Auch die Kombination von Waben mit unterschiedlichen Querschnitten in einem Stützkörper ist möglich, so dass hierdurch ein Stützkörper mit unterschiedlichen Festigkeitseigenschaften in bestimmten Bereichen geschaffen werden kann. Gemäß einer besonders vorteilhaften Weiterbildung der Erfindung, weist die Wabenstruktur jedoch im Querschnitt sechseckige und/oder kreisförmige Waben auf. Die Verwendung derartiger Waben, insbesondere sechseckiger Waben bietet ein besonders gutes Verhältnis von Wandmaterial zu Volumen bei gleichzeitig hoher Festigkeit. Durch die Verwendung derartiger Waben lassen sich besonders leichte Überrollkörper herstellen.

In besonderen Ausführungsformen der Überrollschutzsysteme können die Überrollkörper zusätzliche Anbauteile aufweisen, welche zur Erfüllung unterschiedlicher Funktionen dienen. So kann bspw. ein Anbauteil zur Bildung eines Kopfaufprallbereiches verwendet werden. Gemäß einer besonders vorteilhaften Ausgestaltung der Erfindung weist dabei der Stützkörper Aufnahmeöffnungen zur Anordnung von Anbauteilen, insbesondere eine Nut zur Anordnung einer Zahnstange einer Lagesicherung und/oder eine Aussparung zur Anordnung eines Kopfaufprallkörpers und/oder eines Deformationselements auf. Die Anordnung von Aufnahmeöffnungen bzw. Aussparungen, welche an die entsprechenden Anbauteile angepasst sind, ermöglicht es, die Anbauteile platzsparend an dem Stützkörper anzuordnen. Eine Zahnstange dient dabei zur Lagesicherung eines ausgefahrenen Überrollkörpers, wobei die Zahnstange in der ausgefahrenen Lage mit einer Sperrklinke in Eingriff gelangt. Ein Deformationselement, welches üblicherweise - in Ausfahrrichtung betrachtet - auf dem Überrollkörper aufgesetzt ist, dient zum Abbau von Lastspitzen durch Verformung. Die Verwendung von Aufnahmeöffnungen, bspw. in Form von Aussparungen gewährleistet dabei zudem, dass die Anbauteile formschlüssig an dem Stützkörper angeordnet sind, so dass eine hohe Lagesicherung erreicht wird.

Der Überrollkörper kann grundsätzlich bereits durch die Verwendung eines einzigen Stützkörpers gebildet werden, wobei vorzugsweise dieser sich in Längsachsenrichtung des Überrollkörpers erstreckt. Gemäß einer vorteilhaften Ausgestaltung der Erfindung weist der Überrollkörper jedoch mehrere, vorzugsweise bis zu vier, besonders bevorzugt drei miteinander verbundene Stützkörper auf. Die Stützkörper sind dabei flächig - im Falle der Verwendung von Abdeckkörpern über diese - miteinander verbunden, erstrecken sich in Längsachsenrichtung des Überrollkörpers, so dass die Kontaktflächen in Verstellrichtung des Überrollkörpers verlaufen und bestimmen gemeinsam dessen Festigkeitseigenschaften. Aufgrund der flächigen Ausgestaltung der Stützkörper lässt sich ein entsprechender Verbund mehrer Stützkörper besonders einfach und kostengünstig herstellen, wobei gleichzeitig eine besonders hohe Festigkeitseigenschaft des Überrollkörpers erreicht werden kann. Bevorzugt erstrecken sich die verbundenen Stützkörper dabei in Längsachsenrichtung des Überrollkörpers, wobei grundsätzlich auch ein Aufbau des Überrollkörpers denkbar ist, bei dem die Stützkörper in Längsachsenrichtung des Überrollkörpers übereinandergeschichtet sind, so dass sich die Höhe des Überrollkörpers durch die Höhe des Schichtaufbaus bestimmt.

Die Verbindung der Stützkörper kann grundsätzlich in beliebiger Weise erfolgen, wobei besonders bevorzugt die Stützkörper stoff- und/oder formschlüssig miteinander verbunden sind. Eine derartige Verbindung lässt sich besonders einfach und kostengünstig herstellen und gewährleistet überdies eine besonders gute Verbindung der einzelnen Stützkörper untereinander.

Die Form der einzelnen miteinander verbundenen Stützkörper ist grundsätzlich frei wählbar, wobei in der Regel zur Erzielung einer höchstmöglichen Festigkeit die Stützkörper im Wesentlichen übereinstimmende Abmessungen aufweisen. Nach einer besonders vorteilhaften Ausgestaltung der Erfindung sind die Stützkörper des aus mehreren Stützkörpern zusammengesetzten Überrollkörpers jedoch derart ausgebildet, dass sie im montierten Zustand mindestens eine Aufnahmeöffnung zur Anordnung von Anbauteilen bilden. Gemäß dieser Ausgestaltung der Erfindung weisen die miteinander verbundenen Stützkörper unterschiedliche Abmessungen auf, so dass diese im montierten Zustand eine Aufnahmeöffnung, bspw. eine Aussparung zur Aufnahme eines Anbauteils wie eine Zahnstange ausbilden. Durch diese Ausgestaltung der Erfindung kann auf eine ergänzende Bearbeitung der Stützkörper zur Anordnung von Anbauteilen verzichtet werden. Die Anbauteile lassen sich in einfacher und komfortabler Weise in die durch die unterschiedlichen Stützkörper gebildeten Aufnahmeöffnungen einpassen.

Der Überrollkörper kann neben dem Stützkörper auch weitere, sich im Wesentlichen über die gesamte Länge des Überrollkörpers erstreckende Bauteile aufweisen, an denen bspw. Anbauteile oder die Stützkörper angeordnet werden können, so dass diese gemeinsam mit dem Stützkörper den Überrollkörper bilden. Nach einer besonders vorteilhaften Ausgestaltung der Erfindung ist der Überrollkörper jedoch aus einem oder mehreren Stützkörpern gebildet. Auf zusätzliche, bspw. Rahmenelemente zur Anordnung der Stützkörper kann somit verzichtet werden, so dass die Herstellungskosten des Überrollkörpers in ergänzender Weise reduziert werden. Der Überrollkörper wird allein durch einen oder ggf. mehrere Stützkörper gebildet, die dann miteinander verbunden sind. Die Form des Überrollkörpers wird dabei durch die Abmessungen der einzelnen Stützkörper bzw. des einen Stützkörpers bestimmt.

Eine Verstellung des Überrollkörpers aus der Lagerungsposition in die Überschlagsposition ist grundsätzlich in beliebiger Weise möglich, wobei hierzu auch vorgespannte Federelemente oder dergleichen verwendet werden können. Nach einer besonders vorteilhaften Ausgestaltung der Erfindung ist der Überrollkörper jedoch mittels einer einen Gasgenerator aufweisenden Antriebseinheit aus der Lagerungsposition in die Überschlagsposition verstellbar. Die Verwendung einer entsprechenden Antriebseinheit ermöglicht es, eine zusätzliche Gewichtseinsparung herbeizuführen. Zugleich kann auf Aussparungen an dem Überrollkörper verzichtet werden, welche im Falle der Verwendung von Federelementen erforderlich wären und zu einer strukturellen Schwächung des Überrollkörpers führen würden, die nur durch zusätzlichen, Bauraum beanspruchenden Materialaufwand kompensiert werden kann. Im Crashfall erfolgt eine Verlagerung des Überrollkörpers allein durch den Gasgenerator, wobei die sich mit dem Gasgenerator einstellende schlagartige Druckerhöhung dazu genutzt wird, um den Überrollkörper aus der Lagerungsposition in die Überschlagsposition zu verstellen.

Eine Übersetzung der Gasexpansion in eine Ausfahrbewegung des Überrollkörpers kann in beliebiger Weise, bspw. durch Anordnung des Überrollkörpers in einem mit dem Gasgenerator in Wirkverbindung stehenden Druckraum erfolgen. Nach einer besonders vorteilhaften Ausgestaltung der Erfindung weist die Antriebseinheit jedoch ein durch einen Gasgenerator angetriebenes, mit dem Überrollkörper in Wirkverbindung bringbares Antriebselement auf. Gemäß dieser Ausgestaltung der Erfindung wird durch das expandierende Gas ein Antriebselement beschleunigt, welches seine Bewegungsenergie auf den Überrollkörper überträgt, so dass dieser in die Überschlagsposition verstellt wird. Diese Ausgestaltung weist eine hohe Zuverlässigkeit auf und zeichnet sich durch ihren geringen Bauraum aus.

Für den Stützkörper, d. h. die Waben und ggf. die Abdeckplatten können, wie bereits eingangs dargestellt, verschiedenste Materialien und Materialkombinationen verwendet werden, wobei auch innerhalb des Stützkörpers die Waben aus unterschiedlichen Materialien geformt sein können. Gleiches gilt für die vorzugsweise anzuordnenden Abdeckkörper, welche aus dem Wabenmaterial aber auch aus einem abweichenden Material hergestellt werden können.

Nach einer besonders vorteilhaften Ausgestaltung der Erfindung ist der Stützkörper jedoch durch einen Aluminiumwerkstoff gebildet. Die Verwendung eines derartigen Werkstoffs ermöglicht es, den Überrollkörper in ergänzender Weise im Gewicht zu reduzieren, wobei gleichzeitig die geforderten Festigkeitseigenschaften erreicht werden.

Ein Ausführungsbeispiel der Erfindung wird nachstehend mit Bezug auf die Zeichnungen näher erläutert. In den Zeichnungen zeigen:
- Fig. 1: eine erste perspektivische Ansicht eines Ausschnitts eines Überrollschutzsystems mit einem in einer Überschlagsposition angeordneten Überrollkörper;
- Fig. 2: eine zweite perspektivische Ansicht des Überrollschutzsystems von Fig. 1 und
- Fig. 3: einen Ausschnitt A von Fig. 2 in einer perspektivischen Ansicht.

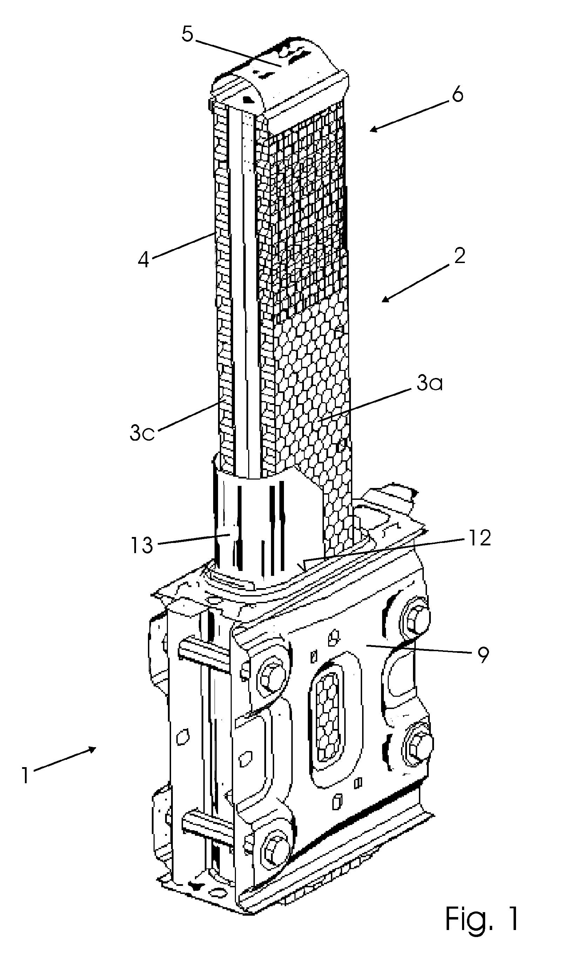

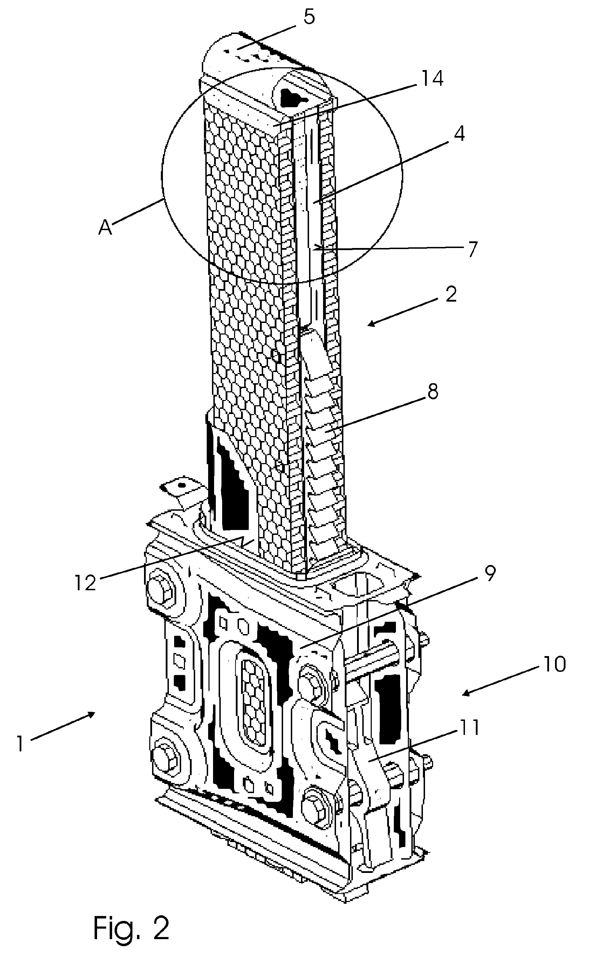

In den Fig. 1 und 2 ist ein Teilbereich eines Überrollschutzsystems 1 mit einem Führungskörper 9 und einem gegenüber dem Führungskörper 9 verstellbaren Überrollkörper 2 dargestellt. Der Führungskörper 9 dient zur ortsfesten Anordnung des Überrollschutzsystems 1 an einem hier nicht dargestellten Fahrzeug.

Zur Verlagerung des Überrollkörpers 2 aus einer Lagerungsposition in die in Fig. 1 und 2 dargestellte Überschlagsposition dient eine hier ebenfalls nicht dargestellte Antriebseinheit, welche im Bedarfsfall, d. h. bei einem drohenden Überschlag, den Überrollkörper 2 in die dargestellte Überschlagsposition verstellt. Der Überrollkörper 2 wird dabei innerhalb der Öffnungen 12 des Führungskörpers 9 geführt.

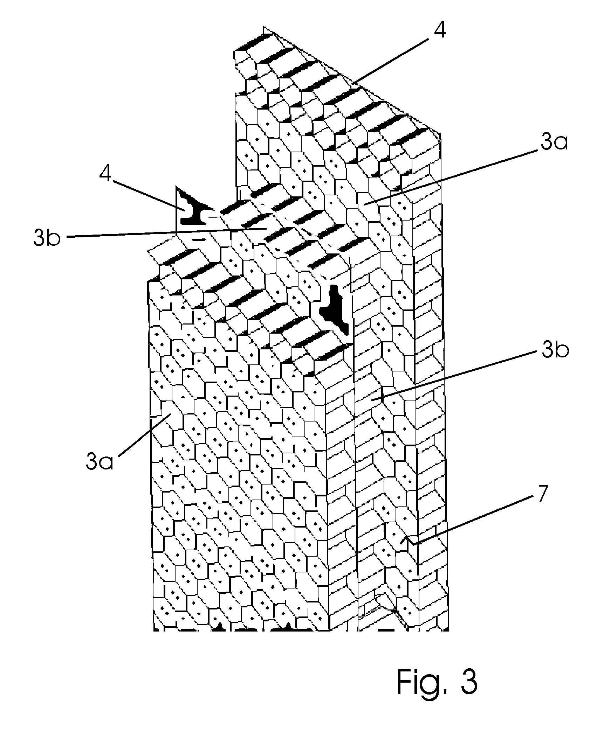

Der Überrollkörper 2 selbst ist aus vier eine Wabenstruktur aufweisenden Stützkörpern 3a, 3b gebildet, welche jeweils aus einzelnen, benachbart zueinander angeordneten sechseckigen Waben gebildet sind. Die jeweils die flächigen Stützkörper 3a, 3b bildenden Waben sind dabei jeweils beiderseits durch Abdeckplatten 4 überdeckt. Die vier Stützkörper 3a, 3b erstrecken sich in Längsachsenrichtung, d. h. in Verfahrrichtung des Überrollkörpers 2 und sind über ihre jeweiligen Abdeckplatten 4 miteinander verbunden, so dass sie in lateraler Richtung einen geschichteten Überrollkörper 2 bilden. Die mittig angeordneten Stützkörper 3b weisen eine geringere Breite als die außenseitig angeordneten Stützkörper 3a auf, so dass der Verbund aus den Stützkörpern 3a, 3b eine Nut 7 bildet, innerhalb derer eine Zahnstange 8 angeordnet ist, welche in einem ausgefahrenen Zustand mit einer Sperrklinke 11 einer Lagesicherung 10 zusammenwirkt, durch die der Überrollkörper 2 in der Überschlagsposition arretiert ist (vgl. Fig. 3).

Der in der Einbaulage den Fahrzeuginsassen zugewandte Stützkörper 3a weist in einem oberen Bereich einen Kopfaufschlagbereich 6 auf, welcher einen von dem übrigen Stützkörper 3a abweichenden Aufbau aufweist. Der Aufbau ist dabei dergestalt, dass er durch Deformationen einen Energieabbau ermöglicht, so dass im Falle eines Kopfaufpralls das Verletzungsrisiko reduziert wird.

Ein - bezogen auf die Einbaulage - auf dem Überrollkörper 2 angeordnetes Deformationselement 5 dient zum Abbau von Lastspitzen, wobei das Deformationselement 5 über seitliche Flansche 14 zusätzlich mit dem Überrollkörper 2 verbunden ist. Ein innerhalb der Öffnung 12 angeordnetes Crashpad 13 dient zur Aufnahme von Druckkräften im Falle eines Überschlages und verhindert somit eine übermäßige Belastung des Überrollkörpers 2.

## Patentansprüche

1. Überrollschutzsystem für Kraftfahrzeuge, mit einem zwischen einer abgesenkten Lagerungsposition und einer aufgestellten Überschlagsposition verstellbaren Überrollkörper (2),
**dadurch gekennzeichnet, dass**
der Überrollkörper (2) mindestens einen eine Wabenstruktur aufweisenden Stützkörper (3a, 3b) aufweist, der sich in Längsachsenrichtung des Überrollkörpers (2) und in dessen Verstellrichtung erstreckt, wobei sich die Öffnungen der Waben dabei senkrecht zur Ebene des flächigen Stützkörpers (3a, 3b) erstrecken.

2. Überrollschutzsystem nach Anspruch 1, **dadurch gekennzeichnet, dass** einerseits oder beiderseits des Stützkörpers (3a, 3b) ein die Wabenstruktur überdeckender, plattenförmiger Abdeckkörper (4) angeordnet ist.

3. Überrollschutzsystem nach Anspruch 1 oder 2, **dadurch gekennzeichnet, dass** der Stützkörper (3a, 3b) einen energieabsorbierenden Kopfaufprallbereich aufweist.

4. Überrollschutzsystem nach einem der vorhergehenden Ansprüche, **dadurch gekennzeichnet, dass** der Kopfaufprallbereich (6) gegenüber dem übrigen Stützkörper (3a) eine abweichende Wabengeometrie und/oder abweichendes Wabenmaterial und/oder abweichendes Abdeckkörpermaterial aufweist.

5. Überrollschutzsystem nach einem der vorhergehenden Ansprüche, **dadurch gekennzeichnet, dass** die Wabenstruktur im Querschnitt 6-eckige und/oder kreisförmige Waben aufweist.

6. Überrollschutzsystem nach einem der vorhergehenden Ansprüche, **dadurch gekennzeichnet, dass** der Stützkörper (3a, 3b) Aufnahmeöffnungen zur Anordnung von Anbauteilen, insbesondere eine Nut (7) zur Anordnung einer Zahnstange (8) einer Lagesicherung und/oder einer Aussparung zur Anordnung eines Kopfaufprallkörpers (6) und/oder eines Deformationselements (5) aufweist.

7. Überrollschutzsystem nach einem der vorhergehenden Ansprüche, **dadurch gekennzeichnet, dass** der Überrollkörper (2) mehrere, vorzugsweise bis zu vier, besonders bevorzugt drei miteinander verbundene Stützkörper (3a, 3b) aufweist.

8. Überrollschutzsystem nach einem der vorhergehenden Ansprüche, **dadurch gekennzeichnet, dass** die Stützkörper (3a, 3b) stoff- und/oder formschlüssig miteinander verbunden sind.

9. Überrollschutzsystem nach einem der vorhergehenden Ansprüche, **dadurch gekennzeichnet, dass** die Stützkörper (3a, 3b) des aus mehreren Stützkörpern (3a, 3b) zusammengesetzten Überrollkörpers (2) derart ausgebildet sind, dass sie im montierten Zustand mindestens eine Aufnahmeöffnung (7) zur Anordnung von Anbauteilen bilden.

10. Überrollschutzsystem nach einem der vorhergehenden Ansprüche, **dadurch gekennzeichnet, dass** der Überrollkörper (2) aus einem oder mehreren Stützkörpern (3a, 3b) gebildet ist.

11. Überrollschutzsystem nach einem der vorhergehenden Ansprüche, **dadurch gekennzeichnet, dass** der Überrollkörper (2) mittels einer einen Gasgenerator aufweisenden Antriebseinheit aus der Lagerungsposition in die Überschlagsposition verstellbar ist.

12. Überrollschutzsystem nach einem der vorhergehenden Ansprüche, **dadurch gekennzeichnet, dass** die Antriebseinheit ein durch einen Gasgenerator angetriebenes, mit dem Überrollkörper (2) in Wirkverbindung bringbares Antriebselement aufweist.

13. Überrollschutzsystem nach einem der vorhergehenden Ansprüche, **dadurch gekennzeichnet, dass** der Stützkörper (3a, 3b) aus einem Aluminiumwerkstoff gebildet ist.

## Claims

1. A rollover protection system for motor vehicles, having a rollover body (2) adjustable between a lowered storage position and an erect rollover position,
**characterized in that**
the rollover body (2) has at least one support body (3a, 3b), having a honeycomb structure, that extends in the longitudinal axis direction of the rollover body (2) and in the movement direction thereof, wherein the openings of the honeycombs extend perpendicular to the plane of the planar support body (3a, 3b).

2. The rollover protection system according to claim 1, **characterized in that** a plate-shaped cover body (4) covering the honeycomb structure is arranged on one or both sides of the support body (3a, 3b).

3. The rollover protection system according to claim 1 or 2, **characterized in that** the support body (3a, 3b) has an energy-absorbing head impact region.

4. The rollover protection system according to one of the preceding claims, **characterized in that** the head impact region (6) has a deviating honeycomb geometry and/or deviating honeycomb material and/or deviating cover body material compared to the remainder of the support body (3a).

5. The rollover protection system according to one of the preceding claims, **characterized in that** the honeycomb structure has hexagonal and/or circular honeycombs in cross-section.

6. The rollover protection system according to one of the preceding claims, **characterized in that** the support body (3a, 3b) has receptacle openings for arranging attachments, particularly a groove (7) for arranging a toothed rack (8) of a position securing and/or a recess for arranging a head impact body (6) and/or a deformation element (5).

7. The rollover protection system according to one of the preceding claims, **characterized in that** the rollover body (2) has several, preferably up to four, particularly preferably three support bodies (3a, 3b) connected together.

8. The rollover protection system according to one of the preceding claims, **characterized in that** the support bodies (3a, 3b) are connected together in a material-bonded and/or form-locking manner.

9. The rollover protection system according to one of the preceding claims, **characterized in that** the support bodies (3a, 3b) of the rollover body (2) comprised of several support bodies (3a, 3b) are designed such that they form at least one receptacle opening (7) for arranging attachments in the assembled state.

10. The rollover protection system according to one of the preceding claims, **characterized in that** the rollover body (2) is formed from one or more support bodies (3a, 3b).

11. The rollover protection system according to one of the preceding claims, **characterized in that** the rollover body (2) can be moved from the storage position into the rollover position by means of a drive unit having a gas generator.

12. The rollover protection system according to one of the preceding claims, **characterized in that** the drive unit has a drive element, driven by a gas generator, that can be brought into effective engagement with the rollover body (2).

13. The rollover protection system according to one of the preceding claims, **characterized in that** the support body (3a, 3b) is formed from an aluminum material.

## Revendications

1. Système de protection contre les tonneaux pour véhicules automobiles, avec un corps de protection contre les tonneaux (2) réglable entre une position de rangement abaissée et une position de tonneau relevée,
**caractérisé en ce que**
le corps de protection contre les tonneaux (2) présente au moins un corps de support (3a, 3b) présentant une structure alvéolée, lequel s'étend dans la direction de l'axe longitudinal du corps de protection contre les tonneaux (2) et dans la direction de réglage de celui-ci, dans lequel les ouvertures des alvéoles s'étendent perpendiculairement au plan du corps de support (3a, 3b) plat.

2. Système de protection contre les tonneaux selon la revendication 1, **caractérisé en ce que** d'un côté ou des deux côtés du corps de support (3a, 3b) est agencé un corps de recouvrement (4) en forme de plaque recouvrant la structure alvéolaire.

3. Système de protection contre les tonneaux selon la revendication 1 ou 2, **caractérisé en ce que** le corps de support (3a, 3b) présente une région de choc de tête absorbant l'énergie.

4. Système de protection contre les tonneaux selon l'une des revendications précédentes, **caractérisé en ce que** la région de choc de tête (6) présente une géométrie alvéolaire différente et/ou un matériau alvéolaire différent et/ou un matériau de corps de recouvrement différent par rapport au reste du corps de support (3 a, 3b).

5. Système de protection contre les tonneaux selon l'une des revendications précédentes, **caractérisé en ce que** la structure alvéolaire présente des alvéoles avec une section transversale hexagonale et/ou circulaire.

6. Système de protection contre les tonneaux selon l'une des revendications précédentes, **caractérisé en ce que** le corps de support (3a, 3b) présente des ouvertures d'admission pour le montage de pièces rapportées, en particulier une rainure (7) pour le montage d'une crémaillère (8) d'un dispositif de blocage en position et/ou un évidement pour le montage d'un corps de choc de tête (6) et/ou d'un élément de déformation (5).

7. Système de protection contre les tonneaux selon l'une des revendications précédentes, **caractérisé en ce que** le corps de protection contre les tonneaux (2) présente plusieurs corps de support (3a, 3b) reliés les uns aux autres, de préférence jusqu'à quatre et encore mieux trois.

8. Système de protection contre les tonneaux selon l'une des revendications précédentes, **caractérisé en ce que** les corps de support (3a, 3b) sont reliés les uns aux autres par adhérence de matière et/ou par complémentarité de forme.

9. Système de protection contre les tonneaux selon l'une des revendications précédentes, **caractérisé en ce que** les corps de support (3a, 3b) du corps de protection contre les tonneaux (2) composé de plusieurs corps de support (3a, 3b) sont conçus de manière à former au moins une ouverture d'admission (7) dans l'état monté, pour le montage de pièces rapportées.

10. Système de protection contre les tonneaux selon l'une des revendications précédentes, **caractérisé en ce que** le corps de protection contre les tonneaux (2) est constitué d'un ou de plusieurs corps de support (3a, 3b).

11. Système de protection contre les tonneaux selon l'une des revendications précédentes, **caractérisé en ce que** le corps de protection contre les tonneaux (2) peut être réglé de la position de rangement à la position de tonneau au moyen d'une unité d'entraînement comportant un générateur de gaz.

12. Système de protection contre les tonneaux selon l'une des revendications précédentes, **caractérisé en ce que** l'unité d'entraînement présente un élément d'entraînement entraîné par un générateur à gaz et apte à être mis en liaison fonctionnelle avec le corps de protection contre les tonneaux (2).

13. Système de protection contre les tonneaux selon l'une des revendications précédentes, **caractérisé en ce que** le corps de support (3a, 3b) est constitué d'un matériau en aluminium.
